# EUROPEAN PATENT APPLICATION

(11) **EP 4 083 129 A1**
(43) Date of publication of application: **02.11.2022**
(21) Application number: 20906350.2
(22) Date of filing: 24.12.2020
(51) Int. Cl.: C08K 5/092, C08K 5/54, C08L 101/00, C08L 63/00, C08K 3/11

(54) **SOLID RESIN MOLDING MATERIAL, MOLDED ARTICLE AND METHOD FOR PRODUCING MOLDED ARTICLE**

(30) Priority: 27.12.2019 JP 2019238693; 15.07.2020 JP 2020121644
(71) Applicant: Sumitomo Bakelite Co.Ltd., Shinagawa-ku Tokyo 140-0002 (JP)
(72) Inventor: NOBE Wakana, Tokyo 140-0002 (JP); MIZOHATA Masaru, Tokyo 140-0002 (JP); NOTSU Kensuke, Tokyo 140-0002 (JP); YOSHIDA Masato, Tokyo 140-0002 (JP); YAMASHITA Katsushi, Tokyo 140-0002 (JP)
(74) Representative: Müller-Boré & Partner Patentanwälte PartG mbB
(86) International application number: PCT/JP2020/048363
(87) International publication number: WO 2021/132434

(57) **Abstract**

A solid resin molding material according to the present invention includes a thermosetting resin (A), a curing agent (B), a carboxylic acid-based dispersant (C), and magnetic particles (D).

## Description

### TECHNICAL FIELD

The present invention relates to a solid resin molding material including magnetic particles, a molded product, and a method for producing a molded product.

### BACKGROUND ART

With the recent miniaturization and weight reduction of electronic devices, there is a demand for a resin molding material including magnetic particles, which has high moldability. The magnetic particles are classified into two types of soft magnetic particles and hard magnetic particles.

Patent Document 1 discloses a carboxylic acid-based dispersant as a dispersant for metal particles.

Patent Document 2 discloses a resin composition including a magnetic fluid containing magnetic particles, a dispersant, and a dispersion medium, and an epoxy resin. In the document, examples of the dispersant include an anionic surfactant having a carboxyl group.

### RELATED DOCUMENT

### PATENT DOCUMENT

[Patent Document 1] Japanese Unexamined Patent Publication No. 2018-59192
[Patent Document 2] International Publication No. WO2018/097292

### SUMMARY OF THE INVENTION

### TECHNICAL PROBLEM

In order to increase saturation magnetic flux density of a magnetic material obtained from the resin molding material (composition), it is necessary to increase a filling amount of the magnetic particles, but increasing the filling amount of the magnetic particles reduces fluidity of a solid resin molding material, such as a formation of an unfilled portion. That is, there is a trade-off relationship between increasing the saturation magnetic flux density of the magnetic material and improving the fluidity of solid resin molding material.

Patent Document 1 does not disclose an example in which the carboxylic acid-based dispersant is used as the magnetic material. In the Patent Document 2, the dispersant is used to improve dispersibility of the magnetic particles in the dispersion medium, but there is no disclosure that the fluidity is improved in a case of molding the solid resin molding material.

### SOLUTION TO PROBLEM

As a result of intensive studies, the present inventors have completed the inventions provided below and solved the above-described problems.

According to the present invention, a solid resin molding material including a thermosetting resin (A), a curing agent (B), a carboxylic acid-based dispersant (C), and magnetic particles (D) is provided.

According to the present invention, a molded product obtained by curing the solid resin molding material is provided.

According to the present invention, a method for producing a molded product, including a step of injecting a molten material of the solid resin molding material into a mold using a transfer molding apparatus and a step of curing the molten material, is provided. Further, according to the present invention, a method for producing a molded product, including a step of compression-molding the solid resin molding material, is provided.

### ADVANTAGEOUS EFFECTS OF INVENTION

According to the present invention, it is possible to provide a solid resin molding material with which a magnetic material having a high saturation magnetic flux density is obtained and which has excellent fluidity, and a molded product obtained from the material and a method for producing a molded product.

### DESCRIPTION OF EMBODIMENTS

Hereinafter, embodiments of the present invention will be described in detail.

Unless otherwise specified, the expression "a to b" in the description of the numerical range in the present specification means equal to or more than a and equal to or less than b. For example, "1% to 5% by mass" means "equal to or more than 1% by mass and equal to or less than 5% by mass".

A solid resin molding material (solid resin composition) according to the present embodiment includes a thermosetting resin (A), a curing agent (B), a carboxylic acid-based dispersant (C), and magnetic particles (D).

According to the solid resin molding material according to the present embodiment, a magnetic material having a high saturation magnetic flux density is obtained, and fluidity is excellent.

That is, the solid resin molding material according to the present embodiment can be suitably used as a material for compression molding, a material for transfer molding, and the like.

### [Thermosetting resin (A)]

Examples of the thermosetting resin (A) include an epoxy resin, a phenol resin, a urea resin, a melamine resin, an unsaturated polyester resin, and a polyimide resin, and it is possible to include at least one thereof. In the present embodiment, the thermosetting resin (A) preferably includes an epoxy resin.

### (Epoxy resin)

The epoxy resin is not particularly limited, and examples thereof include bisphenol-type epoxy resins such as a bisphenol A-type epoxy resin, a bisphenol F-type epoxy resin, a tetramethyl bisphenol F-type epoxy resin, a bisphenol S-type epoxy resin, a bisphenol E-type epoxy resin, a bisphenol M-type epoxy resin, a bisphenol P-type epoxy resin, and a bisphenol Z-type epoxy resin; novolac-type epoxy resins such as a phenol novolac-type epoxy resin and a cresol novolac-type epoxy resin; a biphenyl-type epoxy resin; a biphenyl aralkyl-type epoxy resin; an arylalkylene-type epoxy resin; a naphthalene-type epoxy resin; an anthracene-type epoxy resin; a phenoxy-type epoxy resin; a dicyclopentadiene-type epoxy resin; a norbornene-type epoxy resin; an adamantane-type epoxy resin; a fluorene-type epoxy resin; and a triphenylmethane-type epoxy resin. Among these, examples of the epoxy resin include an epoxy resin which is solid at 23°C.

The solid resin molding material according to the present embodiment may include only one type of the epoxy resin, or may include two or more types of the epoxy resin. In addition, epoxy resins of the same type, which have different molecular weights, may be used in combination.

The epoxy resin preferably includes at least one selected from the group consisting of an epoxy resin including a triphenylmethane structure and/or an epoxy resin including a biphenyl structure. Due to an appropriate rigidity of the structures of these epoxy resins, heat resistance and durability of a molded product to be obtained can be enhanced.

As another aspect, the epoxy resin preferably includes a bisphenol A-type or F-type epoxy resin. Since a resin skeleton of this epoxy resin is moderately flexible, it is possible to easily improve flow characteristics during transfer molding and to lower set temperature during transfer molding. Further, moldability (fillability) during transfer molding and compression molding is improved.

In particular, from the viewpoint of balance of various performances, it is preferable to use (i) at least one selected from the group consisting of an epoxy resin including a triphenylmethane structure and/or an epoxy resin including a biphenyl structure and (ii) a bisphenol A-type or F-type epoxy resin in combination.

The epoxy resin including a triphenylmethane structure is specifically an epoxy resin including a partial structure in which three of four hydrogen atoms of methane (CH₄) are substituted with benzene rings. The benzene rings may be unsubstituted or substituted with a substituent. Examples of the substituent include a hydroxy group and a glycidyloxy group.

Specifically, the epoxy resin including a triphenylmethane structure includes a structural unit represented by General Formula (a1). A triphenylmethane skeleton is formed by connecting two or more of these structural units.

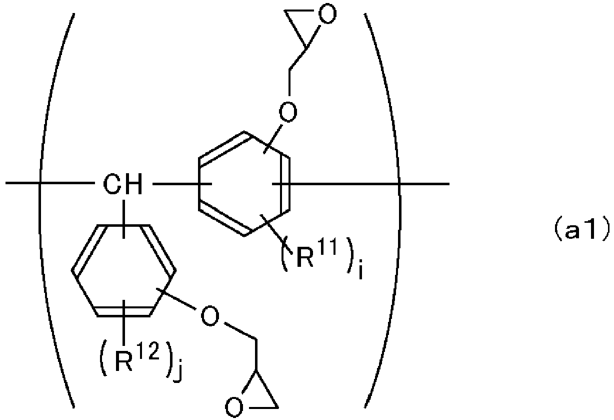

In General Formula (a1),
in a case of a plurality of R¹¹' s, the plurality of R¹¹' s are each independently a monovalent organic group, a halogen atom, a hydroxy group, or a cyano group,
in a case of a plurality of R¹²' s, the plurality of R¹²' s are each independently a monovalent organic group, a halogen atom, a hydroxy group, or a cyano group,
i is an integer of 0 to 3, and
j is an integer of 0 to 4.

Examples of the monovalent organic group of R¹¹ and R¹² include those listed as a monovalent organic group of R^{a} and R^{b} in General Formula (BP) described later.
i and j are each independently preferably 0 to 2 and more preferably 0 or 1.

In one aspect, both i and j are 0. That is, as the one aspect, all benzene rings in General Formula (a1) do not have a substituent other than the specified glycidyloxy group as a monovalent substituent.

The epoxy resin including a biphenyl structure is specifically an epoxy resin including a structure in which two benzene rings are linked by a single bond. The benzene ring here may or may not have a substituent.

Specifically, the epoxy resin including a biphenyl structure has a partial structure represented by General Formula (BP).

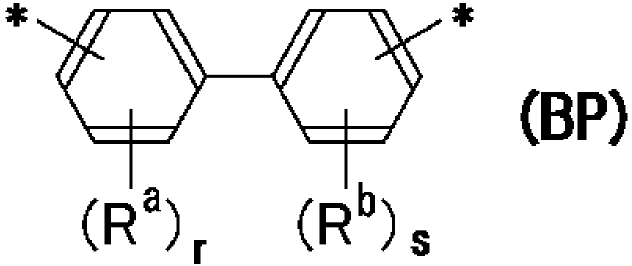

In General Formula (BP),
in a case of a plurality of R^{a}'s or R^{b}'s, the plurality of R^{a}'s or R^{b}'s are each independently a monovalent organic group, a hydroxyl group, or a halogen atom,
r and s are each independently 0 to 4, and
* represents that it is linked to another atomic group.

Specific examples of the monovalent organic group of R^{a} and R^{b} include an alkyl group, an alkenyl group, an alkynyl group, an alkylidene group, an aryl group, an aralkyl group, an alkaryl group, a cycloalkyl group, an alkoxy group, a heterocyclic group, and a carboxyl group.

Examples of the alkyl group include a methyl group, an ethyl group, an n-propyl group, an isopropyl group, an n-butyl group, an isobutyl group, a sec-butyl group, a tert-butyl group, a pentyl group, a neopentyl group, a hexyl group, a heptyl group, an octyl group, a nonyl group, and a decyl group.

Examples of the alkenyl group include an allyl group, a pentenyl group, and a vinyl group.

Examples of the alkynyl group include an ethynyl group.

Examples of the alkylidene group include a methylidene group and an ethylidene group.

Examples of the aryl group include a tolyl group, a xylyl group, a phenyl group, a naphthyl group, and an anthracenyl group.

Examples of the aralkyl group include a benzyl group and a phenethyl group.

Examples of the alkaryl group include a tolyl group and a xylyl group.

Examples of the cycloalkyl group include an adamantyl group, a cyclopentyl group, a cyclohexyl group, and a cyclooctyl group.

Examples of the alkoxy group include a methoxy group, an ethoxy group, an n-propoxy group, an isopropoxy group, an n-butoxy group, an s-butoxy group, an isobutoxy group, a t-butoxy group, an n-pentyloxy group, a neopentyloxy group, and an n-hexyloxy group.

Examples of the heterocyclic group include an epoxy group and an oxetanyl group.

The total number of carbon atoms in the monovalent organic group of R^{a} and R^{b} is, for example, 1 to 30, preferably 1 to 20, more preferably 1 to 10, and particularly preferably 1 to 6.

r and s are each independently preferably 0 to 2 and more preferably 0 or 1. In one aspect, both r and s are 0.

More specifically, the epoxy resin including a biphenyl structure has a structural unit represented by General Formula (BP1).

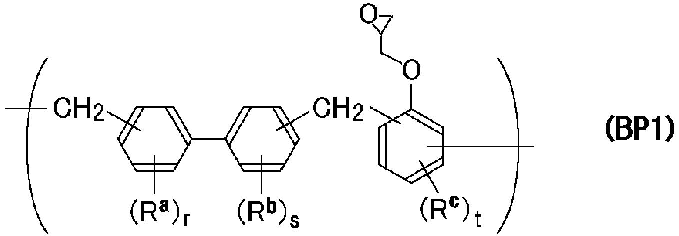

In General Formula (BP1),
definitions and specific aspects of R^{a} and R^{b} are the same as those of General Formula (BP),
definitions and preferred ranges of r and s are the same as those of General Formula (BP),
in a case of a plurality of R^{c}'s, the plurality of R^{c}'s are each independently a monovalent organic group, a hydroxyl group, or a halogen atom, and
t is an integer of 0 to 3.

Specific examples of the monovalent organic group of R^{c} include the same monovalent organic group as those mentioned as specific examples of R^{a} and R^{b}.
t is preferably 0 to 2 and more preferably 0 or 1.

Specific examples of the bisphenol A-type or F-type epoxy resin (epoxy resin produced by a condensation reaction of bisphenol A or bisphenol F with epichlorohydrin) include an epoxy resin represented by General Formula (EP).

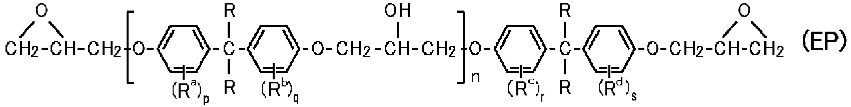

In General Formula (EP),
a plurality of R's are each independently a hydrogen atom or a methyl group, preferably a methyl group,
in a case of a plurality of R^{a}'s, R^{b}'s, R^{c}'s, or R^{d}'s, the plurality of R^{a}'s, R^{b}'s, R^{c}'s, or R^{d}'s are each independently a monovalent organic group, a hydroxyl group, or a halogen atom,
p, q, r, and s are each independently 0 to 4, preferably 0 to 2, and
n is an integer of equal to or more than 0, usually 0 to 10 and preferably 0 to 5.

Specific examples of the monovalent organic group of R^{a}, R^{b}, R^{c}, and R^{d} include the same monovalent organic group as those mentioned as specific examples the monovalent organic group of R^{a} and R^{b} in General Formula (BP).

An amount of the epoxy resin in the solid resin molding material according to the present embodiment is, for example, 0.1% to 20% by mass, preferably 0.5% to 10% by mass.

The amount of the epoxy resin in the solid resin molding material according to the present embodiment is, for example, 0.5% to 60% by volume, preferably 3% to 40% by volume.

### (Phenol resin)

The phenol resin is not particularly limited, and examples thereof include novolac-type phenol resins such as a phenol novolac resin, a cresol novolac resin, and a bisphenol A novolac resin; and resol-type phenol resins. One of these may be used alone, or two or more thereof may be used in combination.

Among the phenol resins, a phenol novolac resin is preferable.

### (Urea resin)

The urea resin is not particularly limited, and examples thereof include a resin obtained by a condensation of urea and formaldehyde.

### (Melamine resin)

The melamine resin is not particularly limited, and for example, a resin obtained by reacting melamine and formaldehyde under neutral or weak alkali can be used.

In addition, as the melamine resin, a commercially available product such as a melamine resin manufactured by Sumitomo Chemical Co., Ltd.) can also be used.

### (Unsaturated polyester resin)

The unsaturated polyester resin is not particularly limited, and for example, the unsaturated polyester resin includes an orthotype using phthalic acid anhydride as a raw material, which is the most common, an isotype using isophthalic acid as a raw material, or a paratype using terephthalic acid as a raw material can be used. In addition, the unsaturated polyester resin includes a prepolymer thereof. One of these may be used alone, or two or more thereof may be used in combination.

### (Polyimide resin)

The polyimide resin is not particularly limited, and for example, the polyimide resin can be synthesized by copolymerizing diamine, dianhydride, and anhydride to synthesize a polyamic acid which is a precursor of polyimide, and then imidizing the polyamic acid.

### [Curing agent (B)]

The curing agent (B) is not particularly limited as long as it can react with the epoxy group of the epoxy resin to form a bond. Examples thereof include amine compounds such as an aliphatic polyamine, an aromatic polyamine, an aromatic diamine, and a dicyandiamide; acid anhydrides such as an alicyclic acid anhydride and an aromatic acid anhydride; phenol compounds such as a novolac-type phenol resin; and imidazole compounds. Among these, examples of the specific curing agent include a curing agent which is solid at 23°C.

The curing agent (B) preferably includes a phenol-based curing agent (phenol compound) as the specific curing agent. As a result, it is expected that durability of a molded product finally obtained is further improved. The phenol-based curing agent typically has two or more hydroxy groups in one molecule.

The phenol-based curing agent preferably includes any skeleton selected from the group consisting of a novolac skeleton and a biphenyl skeleton. In a case where the phenol-based curing agent includes any of these skeletons, the durability of the molded product can be particularly enhanced.

Specifically, the "biphenyl skeleton" is a structure in which two benzene rings are connected by a single bond as in General Formula (BP) in the above description of the epoxy resin.

Specific examples of the phenol-based curing agent having a biphenyl skeleton include compounds having a structure in which, in General Formula (BP1) in the above description of the epoxy resin, the glycidyl group is substituted with a hydrogen atom.

Specific examples of the phenol-based curing agent having a novolac skeleton include compounds having a structural unit represented by General Formula (N).

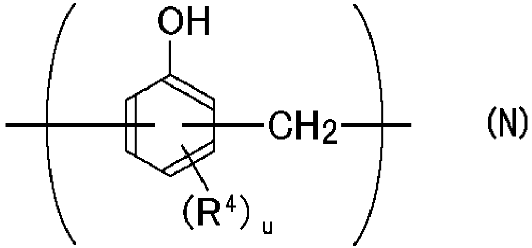

In General Formula (N),
R⁴ represents a monovalent substituent, and
u is an integer of 0 to 3.

Specific examples of the monovalent substituent of R⁴ include the same as those described as the monovalent substituent of R^{a} and R^{b} in General Formula (BP).

u is preferably 0 to 2, more preferably 0 or 1, and still more preferably 0.

In a case where the curing agent (B) is a polymer or an oligomer, a number average molecular weight (standard polystyrene-equivalent value measured by GPC) of the curing agent (B) is, for example, approximately 200 to 800.

A content of the curing agent in the solid resin molding material is, for example, 0.1% to 20% by mass, preferably 0.5% to 10% by mass.

In addition, the content of the curing agent (B) in the solid resin molding material is, for example, 0.5% to 60% by volume, preferably 3% to 40% by volume.

By appropriately adjusting the amount of the curing agent (B), the fluidity can be further improved, and mechanical properties or magnetic characteristics of a cured product to be obtained can be improved.

### [Carboxylic acid-based dispersant (C)]

As the carboxylic acid-based dispersant (C), a known compound in the related art can be used without particular limitation as long as the effects of the present invention can be exhibited.

It is preferable that the carboxylic acid-based dispersant (C) includes at least one compound represented by General Formula (1).

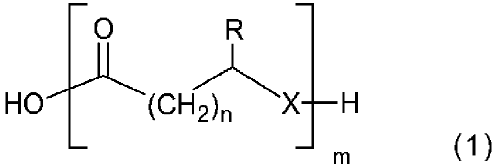

In General Formula (1), R represents a hydrogen atom, a carboxyl group, a hydroxyl group, an alkyl group having 1 to 10 carbon atoms, an alkoxy group having 1 to 10 carbon atoms, an alkylcarboxyl group having 1 to 5 carbon atoms, an alkoxycarboxyl group having 1 to 5 carbon atoms, an alkyl alcohol group having 1 to 5 carbon atoms, or an alkoxy alcohol group having 1 to 5 carbon atoms, and a plurality of R's may be the same or different from each other.

R is preferably a carboxyl group, a hydroxyl group, an alkyl group having 1 to 10 carbon atoms, an alkoxy group having 1 to 10 carbon atoms, or an alkylcarboxyl group having 1 to 5 carbon atoms.

X represents an oxygen atom, an alkylene group having 1 to 30 carbon atoms, a divalent chain hydrocarbon group having 1 to 30 carbon atoms and having one or more double bonds, or a divalent chain hydrocarbon group having 1 to 30 carbon atoms and having one or more triple bonds, and a plurality of X's may be the same or different from each other. Examples of the divalent chain hydrocarbon group include an alkylene group.

X is preferably an oxygen atom, an alkylene group having 1 to 20 carbon atoms, or a divalent chain hydrocarbon group having 1 to 20 carbon atoms and having one or more double bonds, and more preferably an oxygen atom, an alkylene group having 1 to 20 carbon atoms, or an alkylene group having 1 to 20 carbon atoms and having 1 double bond.
n represents an integer of 0 to 20, and m represents an integer of 1 to 5.

The compound represented by General Formula (1) is preferably a compound represented by General Formula (1a) or General Formula (1b). The carboxylic acid-based dispersant (C) can include at least one selected from these compounds.

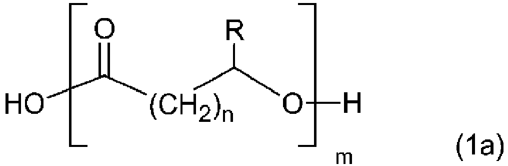

In General Formula (1a), R, m, and n have the same definition as in General Formula (1).

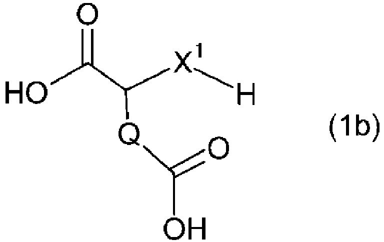

In General Formula (1b), Q represents an alkylene group having 1 to 5 carbon atoms, and is preferably an alkylene group having 1 to 3 carbon atoms. X¹ is preferably an alkylene group having 1 to 30 carbon atoms, a divalent chain hydrocarbon group having 1 to 30 carbon atoms and having one or more double bonds, or a divalent chain hydrocarbon group having 1 to 30 carbon atoms and having one or more triple bonds, more preferably an alkylene group having 10 to 30 carbon atoms, a divalent chain hydrocarbon group having 10 to 30 carbon atoms and having one or more double bonds, or a divalent chain hydrocarbon group having 10 to 30 carbon atoms and having one or more triple bonds, and particularly preferably a divalent chain hydrocarbon group having 10 to 30 carbon atoms and having one or more double bonds.

In the present embodiment, the carboxylic acid-based dispersant (C) can include a polycarboxylic acid-based dispersant having two or more carboxyl groups.

An acid value of the carboxylic acid-based dispersant (C) is 5 to 500 mgKOH/g, preferably 10 to 350 mgKOH/g and more preferably 15 to 100 mgKOH/g. In a case where the acid value is within the above-described range, a magnetic material having a high saturation magnetic flux density is obtained, and fluidity is excellent and moldability is excellent.

The carboxylic acid-based dispersant (C) is preferably solid or waxy.

From the viewpoint of the effects of the present invention, a content of the carboxylic acid-based dispersant (C) is equal to or more than 0.01% by mass and equal to or less than 2% by mass with respect to 100% by mass of the solid resin molding material.

In a case where the magnetic particles (D) is soft magnetic particles (D1), the content of the carboxylic acid-based dispersant (C) is preferably equal to or more than 0.05% by mass and equal to or less than 1% by mass, more preferably equal to or more than 0.08% by mass and equal to or less than 0.8% by mass, and particularly preferably equal to or more than 0.1% by mass and equal to or less than 0.5% by mass with respect to 100% by mass of the solid resin molding material.

On the other hand, in a case where the magnetic particles (D) is hard magnetic particles (D2), the content of the carboxylic acid-based dispersant (C) is preferably equal to or more than 0.1% by mass and equal to or less than 1% by mass, and more preferably equal to or more than 0.5% by mass and equal to or less than 1% by mass with respect to 100% by mass of the solid resin molding material.

Examples of the compound represented by General Formula (1) included in the carboxylic acid-based dispersant (C) include Hypermer KD-4 (mass average molecular weight: 1700, acid value: 33 mgKOH/g), Hypermer KD-9 (mass average molecular weight: 760, acid value: 74 mgKOH/g), Hypermer KD-12 (mass average molecular weight: 490, acid value: 111 mgKOH/g), and Hypermer KD-16 (mass average molecular weight: 370, acid value: 299 mgKOH/g), all manufactured by Croda International Plc.

### [Magnetic particles (D)]

The solid resin molding material according to the present embodiment includes magnetic particles (D).

Examples of the magnetic particles (D) include soft magnetic particles (D1) and hard magnetic particles (D2).

### (Soft magnetic particles (D1))

The soft magnetism refers to ferromagnetism having a small coercive force, and generally, ferromagnetism having a coercive force of equal to or less than 800 A/m is referred to as soft magnetism.

Examples of a constituent material of the soft magnetic particles (D1) include a metal-containing material having an iron content of equal to or more than 85% by mass as a constituent element. Such a metal material having a high iron content as a constituent element exhibits soft magnetism in which magnetic characteristics such as magnetic permeability and magnetic flux density are relatively good. Therefore, a solid resin molding material capable of exhibiting good magnetic characteristics, for example, in a case of being molded into a magnetic core or the like, can be obtained.

Examples of a form of the metal-containing material include simple substances, solid solutions, eutectic crystals, and alloys such as an intermetallic compound. By using the particles composed of such a metal material, it is possible to obtain a solid resin molding material having excellent magnetic characteristics derived from iron, that is, magnetic characteristics such as high magnetic permeability and high magnetic flux density.

In addition, the above-described metal-containing material may contain an element other than iron as a constituent element. Examples of the element other than iron include B, C, N, O, Al, Si, P, S, Ti, V, Cr, Mn, Co, Ni, Cu, Zn, Y, Zr, Nb, Mo, Cd, In, and Sn, and one kind of these may be used or two or more kinds of these may be used in combination. In the present embodiment, one or more elements selected from Fe, Ni, Si, and Co can be included as a main element.

Specific examples of the above-described metal-containing material include pure iron, silicon steel, iron-cobalt alloy, iron-nickel alloy, iron-chromium alloy, iron-aluminum alloy, carbonyl iron, stainless steel, and a composite material containing one or two or more of these. From the viewpoint of availability and the like, silicon steel or carbonyl iron can be preferably used.

The soft magnetic particles (Fe-based soft magnetic particles) may be other particles. For example, the soft magnetic particles may be magnetic particles including Ni-based soft magnetic particles, Co-based soft magnetic particles, and the like.

A median diameter D₅₀ of the soft magnetic particles (D1) on a volume basis is preferably 0.5 to 75 µm, more preferably 0.75 to 65 µm, and still more preferably 1 to 60 µm. By appropriately adjusting the particle diameter (median diameter), it is possible to further improve the fluidity during molding and improve magnetic performance.

The D₅₀ can be obtained by, for example, a laser diffraction/scattering type particle diameter distribution measuring device. Specifically, a particle diameter distribution curve is obtained by measuring the soft magnetic particles (D1) in a dry manner with a particle diameter distribution measuring device "LA-950" manufactured by HORIBA, Ltd., and the D₅₀ can be obtained by analyzing this distribution curve.

The solid resin molding material according to the present embodiment includes the soft magnetic particles (D1) in an amount of equal to or more than 70% by volume and equal to or less than 90% by volume. As a result, a magnetic material having a high saturation magnetic flux density can be obtained.

### (Hard magnetic particles (D2))

The hard magnetic particles are magnetic particles which have a large coercive force and can be regarded as permanent magnets. As the hard magnetic particles (D2), any one can be selected depending on strength of magnetic force and cost.

From the viewpoint of the strength of the magnetic force, the hard magnetic particles (D2) are preferably hard magnetic particles including rare earth elements. Examples of the rare earth elements include Sm, Nd, Pr, Y, La, Ce, and Gd.

Specific examples of preferred hard magnetic particles (D2) include a samarium iron nitrogen magnet (Sm-Fe-N-based magnetic particles), a samarium cobalt magnet (Sm-Co-based magnetic particles), and a neodymium magnet (Nd-Fe-B-based magnetic particles). A ratio of each element in these magnets is not particularly limited. It is sufficient that the required magnetic force and other magnetic characteristics are obtained in the final molded product (bonded magnet).

In addition, a ferrite magnet (hard ferrite) can also be mentioned as an example of usable hard magnetic particles. The ferrite magnet is inferior to the above-described samarium-based magnets or neodymium magnet in terms of strength of the magnetic force, but the ferrite magnet is relatively inexpensive. The ferrite magnet is often sufficient for some applications. A crystal structure of the ferrite magnet is not particularly limited as long as it exhibits hard magnetism.

A surface of the hard magnetic particles (D2) may be treated in some way. For example, the surface of the hard magnetic particles (D2) may be treated with a coupling agent or may be treated with plasma . By the surface treatment, the surface of the hard magnetic particles (D2) may be modified to obtain effects such as improvement of compatibility with the thermosetting resin and the like, improvement of the fluidity.

For example, it is conceivable that, before mixing with the thermosetting resin and the like, the hard magnetic particles (D2) is subjected to a surface treatment with a silane compound such as a silane coupling agent. Specific examples of the silane compound include a compound (E) having an alkoxysilyl group, which will be described later.

Examples of a specific method of the surface treatment include a method of immersing the hard magnetic particles (D2) in a diluted solution of the silane compound, and a method of directly spraying the silane compound on the hard magnetic particles (D2).

As part of the surface treatment, a plasma treatment may be performed before the surface treatment with the silane compound. For example, by performing an oxygen plasma treatment, OH groups are generated on the surface of the hard magnetic particles (D2), and a bond between the hard magnetic particles (D2) and the silane compound is easy. As a result, the functional group can be bonded more firmly.

A shape of the hard magnetic particles (D2) is not particularly limited. The shape of the hard magnetic particles can be a crushed shape, a spherical shape, a scale shape, or the like.

A median diameter D₅₀ of the hard magnetic particles (D2) on a volume basis is preferably 1 to 200 µm, more preferably 1 to 180 µm, and still more preferably 1 to 150 µm. In a case where the D₅₀ is equal to or more than 1 µm, it is easy to further increase the fluidity during molding. In addition, in a case where the D₅₀ is equal to or less than 100 µm, it is easy to sufficiently enhance the magnetic characteristics of the cured product (bonded magnet).

The median diameter D₅₀ can be obtained by, for example, a laser diffraction/scattering type particle diameter distribution measuring device. Specifically, a particle diameter distribution curve is obtained by measuring the hard magnetic particles (D2) in a dry manner with a particle diameter distribution measuring device "LA-950" manufactured by HORIBA, Ltd., and the D₅₀ can be obtained by analyzing this distribution curve.

As the hard magnetic particles (D2), known or commercially available particles can be appropriately used. Examples of a commercially available product thereof include samarium-iron-nitrogen magnetic powder (trade name: SFN alloy fine powder) manufactured by Sumitomo Metal Mining Co., Ltd.

The solid resin molding material according to the present embodiment includes the hard magnetic particles (D2) in an amount of equal to or more than 45% by volume and equal to or less than 80% by volume. As a result, a magnetic material having a high saturation magnetic flux density can be obtained.

### [Compound (E)]

The solid resin molding material according to the present embodiment can further include a compound (E) represented by General Formula (2). By including the compound (E), the fluidity is further improved.

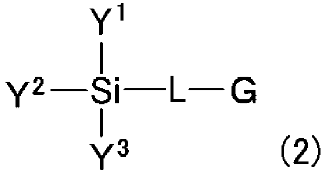

In General Formula (2), Y¹, Y², and Y³ each independently represent an alkoxy group having 1 to 3 carbon atoms or an alkyl group having 1 to 3 carbon atoms, where at least two of Y¹, Y², and Y³ are alkoxy groups having 1 to 3 carbon atoms. All of Y¹, Y², and Y³ are preferably alkoxy groups having 1 to 3 carbon atoms, and more preferably alkoxy groups having 1 or 2 carbon atoms.

L represents a linear or branched alkylene group having 1 to 17 carbon atoms. L is preferably a linear or branched alkylene group having 2 to 15 carbon atoms, and more preferably a linear or branched alkylene group having 2 to 12 carbon atoms.

In a case where L is a long-chain alkylene group, it is presumed that wettability of the resin with respect to the surface of the soft magnetic particles is improved, and the moldability and fluidity are improved.

G represents a vinyl group, an epoxy group, a glycidyl ether group, an oxetanyl group, a (meth)acryloyl group, an amino group, a methyl group, or an anilino group. From the viewpoint of the effects of the present invention, G is preferably a vinyl group, an epoxy group, a glycidyl ether group, a methyl group, or an anilino group, and more preferably an epoxy group, a glycidyl ether group, a methyl group, or an anilino group. From the viewpoint of further improving fluidity of the solid resin molding material during melting, G is preferably an epoxy group, a glycidyl ether group, or an anilino group.

Examples of the compound (E) include KBM-1083 (octenyltrimethoxysilane, manufactured by Shin-Etsu Chemical Co., Ltd.), KBM-3103C (decyltrimethoxysilane, manufactured by Shin-Etsu Chemical Co., Ltd.), KBM-4803 (glycidoxyoctyltrimethoxysilane, manufactured by Shin-Etsu Chemical Co., Ltd.), KBM-5803 (methacryloxyoctyltrimethoxysilane, manufactured by Shin-Etsu Chemical Co., Ltd.), and CF-4083 (N-phenyl-γ-aminopropyltrimethoxysilane, manufactured by Toray·Dow Corning).

The solid resin molding material according to the present embodiment can include the compound (E) in an amount of 0.01% to 1.0% by mass, preferably 0.01% to 0.5% by mass and more preferably 0.02% to 0.5% by mass. As a result, it is possible to provide a solid resin molding material having more excellent fluidity.

### (Curing catalyst)

The solid resin molding material according to the present embodiment preferably includes a curing catalyst. The curing catalyst may be called a curing accelerator or the like. The curing catalyst is not particularly limited as long as it accelerates a curing reaction of the epoxy resin, and a known epoxy curing catalyst can be used.

Specific examples thereof include phosphorus atom-containing compounds such as organic phosphine, a tetra-substituted phosphonium compound, a phosphobetaine compound, an adduct of phosphine compound and quinone compound, and an adduct of phosphonium compound and silane compound; imidazoles (imidazole-based curing accelerators) such as 2-methylimidazole and 2-phenylimidazole; and nitrogen atom-containing compounds such as amidines and tertiary amines, for example, 1, 8-diazabicyclo [5.4.0]undecene-7 and benzyldimethylamine, and quaternary salts of amidine or amine.

In a case where a curing catalyst is used, only one type may be used, or two or more types may be used.

In a case where the curing catalyst is used, a content thereof is preferably 0.01% to 1% by mass and more preferably 0.05% to 0.8% by mass with respect to the entire solid resin molding material. By setting such a numerical range, a sufficient curing accelerating effect can be obtained without excessively deteriorating other performance.

### (Mold release agent)

The solid resin molding material according to the present embodiment preferably includes a mold release agent. As a result, it is possible to improve releasability after transfer molding or compression molding.

Examples of the mold release agent include natural waxes such as carnauba wax, synthetic waxes such as montanic acid ester wax and polyethylene oxide wax, higher fatty acids such as zinc stearate and metal salts thereof, paraffin, and a reaction product of a polycondensate of alkene maleic acid anhydride with stearyl alcohol. These may be used alone or in combination of two or more thereof.

In a case where a mold release agent is used, only one type may be used, or two or more types may be used.

In a case where the mold release agent is used, a content thereof is preferably 0.01% to 3% by mass and more preferably 0.05% to 2% by mass with respect to the entire solid resin molding material. As a result, the effect of improving the releasability can be surely obtained.

### (Other resins)

The solid resin molding material according to the present embodiment may include a thermoplastic resin as long as handleability and the like are not excessively impaired.

Examples of the thermoplastic resin include polyolefins such as polyethylene, polypropylene, an ethylene-vinyl acetate copolymer; liquid crystal polymers such as modified polyolefin, polyamide (nylon), thermoplastic polyimide, and aromatic polyester; polyphenylene oxide, polyphenylene sulfide, polycarbonate, polymethyl methacrylate, polyether, polyetheretherketone, polyetherimide, polyacetal, styrene-based resin, polyolefin-based resin, polyvinyl chloride-based resin, polyurethane-based resin, polyester-based resin, polyamide-based resin, polybutadiene-based resin, transpolyisoprene-based resin, fluororubber-based resin, and chlorinated polyethylene-based resin.

### (Other components)

The solid resin molding material according to the present embodiment may include a component other than the above-described components. For example, the solid resin molding material according to the present embodiment may include one or two or more of a low stress agent, an adhesion aid, a coloring agent, an antioxidant, an anticorrosion agent, a dye, a pigment, a flame retardant, and the like.

### (Regarding volatile organic solvent)

As a component other than the above-described various components, it is preferable that the solid resin molding material according to the present embodiment does not include a volatile organic solvent, or includes a small amount of the volatile organic solvent. As a result, the handleability of the solid resin molding material is further improved.

Specifically, a content of the volatile organic solvent in the solid resin molding material according to the present embodiment is preferably equal to or less than 3% by mass, more preferably equal to or less than 2% by mass, and still more preferably equal to or less than 1% by mass. Particularly preferably, the solid resin molding material according to the present embodiment substantially includes no volatile organic solvent.

### (Form of solid resin molding material)

The solid resin molding material according to the present embodiment is preferably in a form of tablets or granules at 23°C, and more preferably in a form of tablets at 23°C. Since the solid resin molding material is in the form of tablets or granules, it is easy to distribute and store the solid resin molding material, and it is easy to adopt the solid resin molding material to transfer molding or compression molding.

### (Characteristics in a case where solid resin molding material is melted)

Since the solid resin molding material according to the present embodiment includes the carboxylic acid-based dispersant (C), preferably the compound of General Formula (1), the fluidity of the solid resin molding material according to the present embodiment during melting can be improved, and the moldability and the like can be improved.

Specifically, a melt viscosity measured at a temperature condition of 175°C using a constant load extrusion type capillary rheometer (flow tester) is preferably equal to or more than 0.1 Pa · s and equal to or less than 300 Pa·s, more preferably equal to or more than 0.1 Pa·s and equal to or less than 200 Pa·s, and still more preferably equal to or more than 0.1 Pa·s and equal to or less than 150 Pa·s.

As the constant load extrusion type capillary rheometer, for example, a flow tester "CFT-500D" manufactured by Shimadzu Corporation can be used. In addition, a die hole diameter can be, for example, 0.5 mm, a die length can be, for example, 1.0 mm, and a pressure (load) can be, for example, 40 kgf (392 N).

In addition, a flow length measured by a spiral flow test at a temperature of 175°C can be equal to or more than 15 cm, preferably equal to or more than 20 cm and more preferably equal to or more than 25 cm.

As the spiral flow test, for example, with a low-pressure transfer molding machine ("KTS-15" manufactured by KOHTAKI Corporation), the solid resin molding material is injected into a mold for measuring spiral flow according to EMMI-1-66 under conditions of a mold temperature of 175°C, an injection pressure of 6.9 MPa, and a curing time of 120 seconds, thereby measuring the flow length.

### (Glass transition temperature of cured product)

A glass transition temperature of a cured product which is obtained by melting and molding the solid resin molding material according to the present embodiment at 175°C and curing the solid resin molding material according to the present embodiment in an atmosphere at 175°C for 4 hours is preferably 150°C to 220°C and more preferably 160°C to 200°C. By designing the solid resin molding material so that the glass transition temperature is equal to or higher than 150°C, for example, it is easy to clear heat resistance required for in-vehicle applications. By designing the solid resin molding material so that the glass transition temperature is equal to or lower than 220°C, it is possible to mold the solid resin molding material at a relatively low temperature. This is preferable in terms of suppressing shrinkage of a molded product due to low temperature processing.

### (Method for producing solid resin molding material)

Industrially, the solid resin molding material according to the present embodiment can be produced by, for example, (1) mixing each component using a mixer, (2) kneading the mixture at approximately 120°C for equal to or more than 5 minutes, preferably approximately 10 minutes using a roll to obtain a kneaded product, (3) cooling the obtained kneaded product, and then (4) pulverizing the obtained kneaded product. From the above, a powdery solid resin molding material can be obtained. From the viewpoint of the effects of the present invention, the soft magnetic particles may be treated with the compound of General Formula (1) in advance and then mixed.

The powdery solid resin molding material may be tableted into granules or tablets. As a result, a solid resin molding material particularly suitable for use in a transfer molding method or a compression molding method can be obtained.

### <Molded product>

A molded product according to the present embodiment can be obtained by curing the above-described solid resin molding material.

Since the molded product according to the present embodiment is composed of a composite material having a high saturation magnetic flux density as described above, a high saturation magnetic flux density can be realized, which is equal to or more than 1.0T, preferably equal to or more than 1.2 T and more preferably equal to or more than 1.3 T.

### <Method for producing molded product>

A method for producing a molded product is not particularly limited, and examples thereof include a transfer molding method and a compression molding method.

### (Transfer molding method)

A method for producing a molded product by the transfer molding method includes a step of injecting a molten material of the above-described solid resin molding material into a mold using a transfer molding apparatus, and a step of curing the molten material.

According to the solid resin molding material according to the present embodiment, it is possible to achieve both high saturation magnetic flux density of the magnetic material and improvement of fluidity of a resin molding material, which are in a trade-off relationship.

The transfer molding can be performed by appropriately using a known transfer molding apparatus. Specifically, first, a preheated solid resin molding material is placed in a heating chamber, which is also called a transfer chamber, and melted to obtain a molten material. Thereafter, the molten material is poured into a mold with a plunger and held as it is to cure the molten material. As a result, a desired molded product can be obtained.

From the viewpoint of controllability of dimensions of the molded product, improvement of degree of freedom in shape, and the like, the transfer molding is preferable.

Various conditions in the transfer molding can be set optionally. For example, the preheating temperature can be appropriately adjusted to 60°C to 100°C, the heating temperature for melting can be appropriately adjusted to 100°C to 250°C, the mold temperature can be appropriately adjusted to 100°C to 200°C, and the pressure at which the molten material of the solid resin molding material is injected into the mold can be appropriately adjusted to 1 to 20 MPa.

By not raising the mold temperature too high, shrinkage of the molded product can be suppressed.

### (Compression molding method)

A method for producing a molded product by the compression molding method includes a step of compression-molding the above-described solid resin molding material.

The compression molding can be performed by appropriately using a known compression molding apparatus. Specifically, the above-described solid resin molding material is placed in a concave portion of a concave fixed mold which opens upward. The solid resin molding material can be preheated. As a result, the molded product can be uniformly cured, and the molding pressure can be reduced.

Next, from above, a convex mold is moved to the concave fixed mold, and the solid resin molding material is compressed in a cavity formed by the convex portion and the concave portion. First, the solid resin molding material is sufficiently softened and flowed at a low pressure, then the mold is closed, and the pressure is applied again thereto to cure the solid resin molding material for a predetermined time.

Various conditions in the compression molding can be set optionally. For example, the preheating temperature can be appropriately adjusted to 60°C to 100°C, the heating temperature for melting can be appropriately adjusted to 100°C to 250°C, the mold temperature can be appropriately adjusted to 100°C to 200°C, the pressure for compressing the solid resin molding material with the mold can be appropriately adjusted to 1 to 20 MPa, and the curing time can be appropriately adjusted to 60 to 300 seconds.

By not raising the mold temperature too high, shrinkage of the molded product can be suppressed.

The embodiments of the present invention have been described above, but these are examples of the present invention and various configurations other than the above can be adopted as long as the effects of the present invention are not impaired.

### [EXAMPLES]

Hereinafter, the present invention will be described in more detail by Examples, but the present invention is not limited thereto.

### <Examples 1 to 11 and Comparative Examples 1 to 6>

First, each component shown in Table-1 and Table-2 was prepared in a ratio described in Table-1 and Table-2, and mixed uniformly to obtain a mixture.

Next, the obtained mixture was kneaded at 120°C for 10 minutes. After completion of the kneading, the obtained kneaded product was cooled to room temperature to be solidified, and then pulverized and tableted. From the above, a tablet-shaped solid resin molding material was obtained.

Raw material components described in Table-1 and Table-2 are shown below. Evaluation results of the solid resin molding material and the molded product are shown in Table-1 and Table-2. The content (% by volume) of magnetic particles shown in Table-1 and Table-2 is a content (that is, a filling rate) in a case where the solid resin molding material including soft magnetic particles or hard magnetic particles is set as 100% by volume.

### (Thermosetting resin)

- Epoxy resin 1: jER1032H60 (epoxy resin including a triphenylmethane structure, manufactured by Mitsubishi Chemical Corporation; solid at 23°C; containing the structural unit represented by General Formula (a1) described above)
- Epoxy resin 2: YL-6810 (bisphenol A-type epoxy resin manufactured by Mitsubishi Chemical Corporation; solid at 23°C; containing the structure represented by General Formula (EP) described above)
- Epoxy resin 3: NC3000L (biphenyl aralkyl-type epoxy resin manufactured by Nippon Kayaku Co., Ltd.; solid at 23°C; containing the structural unit represented by General Formula (BP1) described above)

### (Curing agent)

- Curing agent 1: PR-HF-3 (novolac-type phenol resin manufactured by Sumitomo Bakelite Co., Ltd.; solid at 23°C)
- Curing agent 2: MEH-7851SS (biphenylene skeleton-containing phenol aralkyl resin manufactured by MEIWA PLASTIC INDUSTRIES, LTD.; solid at 23°C)

### (Mold release agent (wax))

- Mold release agent 1: Licolub WE-4 (ester wax manufactured by Clariant)
- Mold release agent 2: TOWAX-132 (carnauba wax manufactured by TOA KASEI CO., LTD.)

### (Catalyst)

• Catalyst 1: compound represented by the following chemical formula 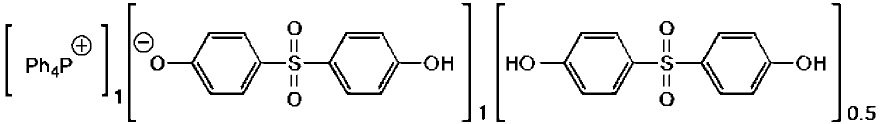 37.5 g (0.15 mol) of 4,4'-bisphenol S and 100 ml of methanol were charged into a separable flask equipped with a stirring device and dissolved under stirring at room temperature. A solution obtained by dissolving 4.0 g (0.1 mol) of sodium hydroxide in 50 ml of methanol in advance was further added thereto under stirring. Subsequently, a solution obtained by dissolving 41.9 g (0.1 mol) of tetraphenyl phosphonium bromide in 150 ml of methanol in advance was added to the mixture. Stirring was continued for a while, 300 ml of methanol was added thereto, and then the solution in the flask was added dropwise to a large amount of water under stirring to obtain white precipitates. The precipitates were filtered and dried to obtain the catalyst 1 as white crystals.

### • Catalyst 2: 2PZ-PW (2-phenylimidazole manufactured by SHIKOKU CHEMICALS CORPORATION)

### (Adhesion aid)

- Adhesion aid 1: CDA-1M (heavy metal inactivating agent, manufactured by ADEKA Corporation)

### (Compound represented by General Formula (2))

- Coupling agent 1: CF-4083 (phenylaminopropyltrimethoxysilane, manufactured by Toray·Dow Corning)

### (Carboxylic acid-based dispersant)

- Dispersant 1: Hypermer KD-4 (compound represented by General Formula (1a) described above; mass average molecular weight: 1700, acid value: 33 mgKOH/g; manufactured by Croda International Plc)
- Dispersant 2: Hypermer KD-9 (compound represented by General Formula (1a) described above; mass average molecular weight: 760, acid value: 74 mgKOH/g; manufactured by Croda International Plc)
- Dispersant 3: Hypermer KD-16 (compound represented by General Formula (1b) described above; mass average molecular weight: 370, acid value: 299 mgKOH/g; manufactured by Croda International Plc)

### (Soft magnetic particles)

- Iron-based particles 1: amorphous magnetic powder (manufactured by Epson Atmix Corporation, KUAMET6B2 150C01, median diameter D₅₀: 50 µm)
- Iron-based particles 2: amorphous magnetic powder (manufactured by Epson Atmix Corporation, AW2-08 PF3FG, median diameter D₅₀: 3.4 µm)
- Iron-based particles 3: crystalline magnetic powder (manufactured by Daido Steel Co., Ltd., DAPMS7-100, median diameter D₅₀: 75 µm)
- Iron-based particles 4: crystalline magnetic powder (manufactured by Daido Steel Co., Ltd., DAPMS7-200, median diameter D₅₀: 52 µm)
- Iron-based particles 5: crystalline magnetic powder (manufactured by Epson Atmix Corporation, Fe-3.5Si-4.5Cr, median diameter D₅₀: 10 µm, Fe: 93% by mass)
- Iron-based particles 6: crystalline magnetic powder (manufactured by BASF, CIP-HQ, median diameter D₅₀: 2 µm)
- Iron-based particles 7: amorphous magnetic powder (manufactured by Epson Atmix Corporation, KUAMET6B2 053C03, median diameter D₅₀: 23 µm)

### (Hard magnetic particles)

Hard magnetic particles 1: SFN alloy fine powder (samarium iron nitrogen magnet manufactured by Sumitomo Metal Mining Co., Ltd., D₅₀ = 2.4 µm, crushed shape)

### (Silica)

- Silica 1: SO-25R of Admatechs
- Silica 2: SO-32R of Admatechs

### <Evaluation>

### (Fluidity: spiral flow test)

A spiral flow test was performed using the resin compositions of Examples and Comparative Examples.

For the test, with a low-pressure transfer molding machine ("KTS-15" manufactured by KOHTAKI Corporation), an encapsulating resin composition was injected into a mold for measuring spiral flow according to EMMI-1-66 under conditions of a mold temperature of 175°C, an injection pressure of 6.9 MPa, and a curing time of 120 seconds, thereby measuring a flow length. As the numerical value is larger, the fluidity is better.

### (Melt viscosity)

Using a flow tester (a type of constant load extrusion type capillary rheometer) "CFT-500D" manufactured by Shimadzu Corporation, a melt viscosity of the solid resin molding material was measured under the conditions of a temperature of 175°C, a die hole diameter of 0.5 mm, a die length of 1.0 mm, and a pressure of 40 kgf.

### (Relative magnetic permeability)

The obtained solid resin molding material was injection-molded using a low-pressure transfer molding machine ("KTS-30" manufactured by KOHTAKI Corporation) at a mold temperature of 175°C, an injection pressure of 9.8 MPa, and a curing time of 120 seconds to obtain a columnar molded product having a diameter of 16mmΦ and a height of 32 mm. Next, the obtained molded product was post-cured at 175°C for 4 hours to produce a test piece for evaluating relative magnetic permeability. With regard to the obtained columnar molded product, using a DC/AC magnetization characteristic test device ("MTR-3368" manufactured by Metron Giken Co., Ltd.), a B-H initial magnetization curve was measured in a range of H = 0 to 100 kA/m, a value of 10 kA/m of B/H of the B-H initial magnetization curve was defined as the relative magnetic permeability.

### (Saturation magnetic flux density)

For a saturation magnetic flux density, at room temperature (25°C), using a DC/AC magnetization characteristic test device (manufactured by METRON Technology Research, MTR-3368), an external magnetic field of 100 kA/m was applied to the above-described molded product. As a result, the saturation magnetic flux density at room temperature was measured.

### [Table 1]

**Table-1**

| | Product name | Unit | Example 1 | Example 2 | Comparative Example 1 | Example 3 | Comparative Example 2 | Example 4 | Comparative Example 3 | Example 5 | Example 6 | Example 7 | Comparative Example 4 | Example 8 | Comparative Example 5 |
|---|---|---|---|---|---|---|---|---|---|---|---|---|---|---|---|
| Epoxy resin 1 | jER1032H60 | | 1.73 | 1.29 | 1.82 | 2.14 | 2.23 | 1.30 | 1.37 | 2.35 | 1.99 | 2.35 | 2.44 | | |
| Epoxy resin 2 | YL6810 | | 0.44 | 0.33 | 0.47 | 0.55 | 0.57 | 1.31 | 1.38 | 0.60 | 0.51 | 0.60 | 0.63 | | |
| Epoxy resin 3 | NC-3000L | | | | | | | | | | | | | 1.41 | 1.47 |
| Curing agent 1 | PR-HF-3 | | 1.33 | 0.99 | 1.40 | 1.65 | 1.72 | 1.59 | 1.69 | 1.81 | 1.53 | 1.81 | 1.88 | | |
| Curing agent 2 | MEH-7851SS | | | | | | | | | | | | | 1.04 | 1.08 |
| Mold release agent 1 | WE-4 | | 0.07 | 0.05 | 0.08 | 0.09 | 0.09 | 0.09 | 0.09 | 0.10 | 0.08 | 0.10 | 0.10 | | |
| Mold release agent 2 | TOWAX-132 | | | | | | | | | | | | | 0.38 | 0.38 |
| Catalyst 1 | | | 0.03 | 0.03 | 0.04 | 0.04 | 0.05 | 0.08 | 0.09 | 0.02 | 0.02 | 0.02 | 0.02 | | |
| Catalyst 2 | 2PZ-PW | | | | | | | | | | | | | 0.03 | 0.03 |
| Adhesion aid 1 | CDA-1M | | 0.09 | 0.07 | 0.09 | 0.11 | 0.11 | | | 0.12 | 0.10 | 0.12 | 0.12 | | |
| Coupling agent 1 | CF-4083 | | 0.06 | 0.07 | 0.06 | 0.07 | 0.07 | | | 0.06 | 0.06 | 0.06 | 0.06 | 0.34 | 0.34 |
| Dispersant 2 | Hypermer KD-9 | % by mass | 0.20 | 0.20 | - | | | 0.25 | - | 0.20 | 0.20 | | | 0.10 | - |
| Dispersant 3 | Hypermer KD-16 | | | | | 0.20 | - | | | | | 0.20 | | | |
| Iron-based particles 1 | KUAMET6B2 150C01 | | 75.66 | 76.44 | 75.66 | 74.96 | 74.96 | | | | | | | | |
| Iron-based particles 2 | AW2-08 PF3FG | | 18.93 | 19.12 | 18.93 | 18.76 | 18.76 | | | | | | | | |
| Iron-based particles 3 | DAPMS7-100 | | | | | | | 66.32 | 66.32 | | | | | | |
| Iron-based particles 4 | DAPMS7-200 | | | | | | | | | 63.49 | 64.00 | 63.49 | 63.49 | | |
| Iron-based particles 5 | Fe-3.5Si-4.5Cr | | | | | | | 27.29 | 27.29 | 15.96 | 16.09 | 15.96 | 15.96 | | |
| Iron-based particles 6 | CIP-HQ | | | | | | | | | 15.30 | 15.42 | 15.30 | 15.30 | 30.58 | 30.58 |
| Iron-based particles 7 | KUAMET6B2 053C03 | | | | | | | | | | | | | 66.12 | 66.12 |
| Silica 1 | SO-25R | | 1.46 | 1.41 | 1.46 | 1.44 | 1.44 | 1.18 | 1.18 | | | | | | |
| Silica 2 | SO-32R | | | | | | | 0.59 | 0.59 | | | | | | |
| Total | | | 100.00 | 100.00 | 100.00 | 100.00 | 100.00 | 100.00 | 100.00 | 100.00 | 100.00 | 100.00 | 100.00 | 100.00 | 100.00 |
| Content of magnetic particles | | % by volume | 78.2 | 82.0 | 78.2 | 75.0 | 75.0 | 73.5 | 73.5 | 75.0 | 78.0 | 75.0 | 75.0 | 83.9 | 83.9 |
| Spiral flow (175°C) | | cm | 97 | 43 | 73 | 101 | 83 | 76 | 43 | 65 | 40 | 71 | 53 | 30 | 20 |
| Melt viscosity (175°C) | | Pa·s | 8 | 127 | 20 | | | | | | | | | 123 | 130 |
| Relative magnetic permeability (10 kA/m) | | - | 21 | 25 | 22 | 17 | 18 | 17 | 18 | 22 | 25 | 22 | 22 | 25 | 23 |
| Saturation magnetic flux density | | T | 1.05 | 1.11 | 1.06 | 1.01 | 1.02 | 1.23 | 1.25 | 1.32 | 1.36 | 1.31 | 1.32 | 1.19 | 1.19 |

### [Table 2]

**Table-2**

| | Product name | Unit | Example 9 | Example 10 | Example 11 | Comparative Example 6 |
|---|---|---|---|---|---|---|
| Epoxy resin 1 | jER1032H60 | % by mass | 3.82 | 3.82 | 3.82 | 4.11 |
| Epoxy resin 2 | YL6810 | | 3.91 | 3.91 | 3.91 | 4.21 |
| Curing agent 1 | PR-HF-3 | | 4.70 | 4.70 | 4.70 | 5.06 |
| Mold release agent 1 | WE-4 | | 0.26 | 0.26 | 0.26 | 0.28 |
| Catalyst 1 | | | 0.26 | 0.26 | 0.26 | 0.28 |
| Dispersant 1 | Hypermer KD-4 | | 1.00 | | | |
| Dispersant 2 | Hypermer KD-9 | | | 1.00 | | |
| Dispersant 3 | Hypermer KD-16 | | | | 1.00 | |
| Hard magnetic particles 1 | SFN alloy fine powder | | 86.05 | 86.05 | 86.05 | 86.05 |
| Total | | | 100.00 | 100.00 | 100.00 | 100.00 |
| Content of magnetic particles | | % by volume | 50.0 | 50.0 | 50.0 | 50.0 |
| Spiral flow(175°C) | | cm | 45.00 | 54.00 | 58.00 | 12.00 |
| Residual magnetic flux density | | T | 0.67 | 0.67 | 0.67 | × (cannot be molded) |

From the results shown in Table-1 and Table-2, it was confirmed that, in the solid resin molding materials of Examples to which the carboxylic acid-based dispersant was added, a magnetic material having a high saturation magnetic flux density was obtained. In addition, compared to the solid resin molding materials of Comparative Examples to which the carboxylic acid-based dispersant was not added, due to its excellent fluidity, the solid resin molding materials of Examples had excellent moldability in transfer molding and compression molding.

This application claims priority based on Japanese application Japanese Patent Application No. 2019-238693 filed on December 27, 2019 and Japanese application Japanese Patent Application No. 2020-121644 filed on July 15, 2020, all of its disclosures are incorporated herein.

## Claims

1. A solid resin molding material comprising:
(A) a thermosetting resin;
(B) a curing agent;
(C) a carboxylic acid-based dispersant; and
(D) magnetic particles.

2. The solid resin molding material according to claim 1,
wherein the carboxylic acid-based dispersant (C) includes a polycarboxylic acid-based dispersant.

3. The solid resin molding material according to claim 1,
wherein the carboxylic acid-based dispersant (C) includes at least one compound represented by General Formula (1), 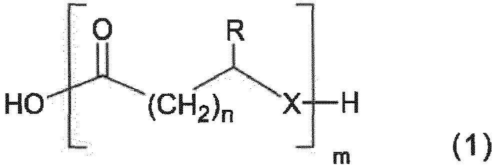 wherein, in General Formula (1), R represents a hydrogen atom, a carboxyl group, a hydroxyl group, an alkyl group having 1 to 10 carbon atoms, an alkoxy group having 1 to 10 carbon atoms, an alkylcarboxyl group having 1 to 5 carbon atoms, an alkoxycarboxyl group having 1 to 5 carbon atoms, an alkyl alcohol group having 1 to 5 carbon atoms, or an alkoxy alcohol group having 1 to 5 carbon atoms, a plurality of R's may be the same or different from each other, X represents an oxygen atom, an alkylene group having 1 to 30 carbon atoms, a divalent chain hydrocarbon group having 1 to 30 carbon atoms and having one or more double bonds, or a divalent chain hydrocarbon group having 1 to 30 carbon atoms and having one or more triple bonds, a plurality of X's may be the same or different from each other, n represents an integer of 0 to 20, and m represents an integer of 1 to 5.

4. The solid resin molding material according to claim 3,
wherein the carboxylic acid-based dispersant (C) includes at least one compound represented by General Formula (la), 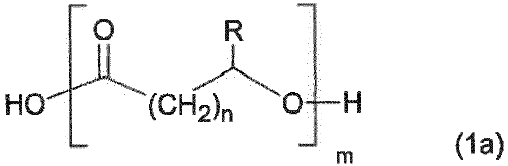 wherein, in General Formula (la), R, m, and n have the same definition as in General Formula (1).

5. The solid resin molding material according to any one of claims 1 to 4,
wherein the carboxylic acid-based dispersant (C) includes at least one compound represented by General Formula (lb), 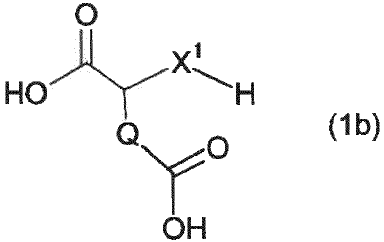 wherein, in General Formula (1b), Q represents an alkylene group having 1 to 5 carbon atoms, and X¹ represents an alkylene group having 1 to 30 carbon atoms, a divalent chain hydrocarbon group having 1 to 30 carbon atoms and having one or more double bonds, or a divalent chain hydrocarbon group having 1 to 30 carbon atoms and having one or more triple bonds.

6. The solid resin molding material according to any one of claims 1 to 5,
wherein an acid value of the carboxylic acid-based dispersant (C) is equal to or more than 5 mgKOH/g and equal to or less than 500 mgKOH/g.

7. The solid resin molding material according to any one of claims 1 to 6,
wherein the carboxylic acid-based dispersant (C) is solid or waxy.

8. The solid resin molding material according to any one of claims 1 to 7,
wherein the magnetic particles (D) is soft magnetic particles (D1),
a content of the soft magnetic particles (D1) is equal to or more than 70% by volume and equal to or less than 90% by volume.

9. The solid resin molding material according to any one of claims 1 to 8,
wherein the thermosetting resin (A) includes an epoxy resin.

10. The solid resin molding material according to any one of claims 1 to 9,
wherein the curing agent (B) includes a phenol-based curing agent.

11. The solid resin molding material according to any one of claims 1 to 10, further comprising:
a compound (E) represented by General Formula (2), 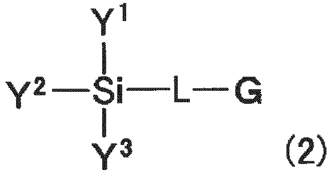 wherein, in General Formula (2), Y¹, Y², and Y³ each independently represent an alkoxy group having 1 to 3 carbon atoms or an alkyl group having 1 to 3 carbon atoms, where at least two of Y¹, Y², and Y³ are alkoxy groups having 1 to 3 carbon atoms, L represents a linear or branched alkylene group having 1 to 17 carbon atoms, and G represents a vinyl group, an epoxy group, a glycidyl ether group, an oxetanyl group, a (meth)acryloyl group, an amino group, a methyl group, or an anilino group.

12. The solid resin molding material according to any one of claims 1 to 11,
wherein a flow length measured by a spiral flow test at a temperature of 175°C is equal to or more than 15 cm.

13. The solid resin molding material according to any one of claims 1 to 12,
wherein a melt viscosity measured at a temperature condition of 175°C using a constant load extrusion type capillary rheometer is equal to or more than 0.1 Pa·s and equal to or less than 300 Pa·s.

14. The solid resin molding material according to any one of claims 1 to 13,
wherein the solid resin molding material is in a form of tablets or granules at 23°C.

15. A molded product obtained by curing the solid resin molding material according to any one of claims 1 to 14.
